# EUROPÄISCHE PATENTSCHRIFT

(11) **EP 1 923 261 B1**
(45) Veröffentlichungstag und Bekanntmachung des Hinweises auf die Patenterteilung: **15.09.2010**
(21) Anmeldenummer: 07020891.3
(22) Anmeldetag: 25.10.2007
(51) Int. Cl.: B60Q 1/08

(54) **Beleuchtungssystem eines Kraftfahrzeugs**
Lighting system for a motor vehicle
Système d'éclairage d'un véhicule automobile

(30) Priorität: 10.11.2006 DE 102006052994
(43) Veröffentlichungstag der Anmeldung: 21.05.2008
(73) Patentinhaber: GM Global Technology Operations, Inc., Detroit, MI 48265-3000 (US)
(72) Erfinder: Illium, Justus, 55130 Mainz (DE); Kanning, Torsten, 65346 Eltville/Erbach (DE)
(74) Vertreter: Daniel, Ulrich W.P.

(56) Entgegenhaltungen:
- WO-A-03/008232
- WO-A-2007/025931
- DE-A1-102004 021 547
- US-A1- 2003 156 016
- US-A1- 2005 275 562

## Beschreibung

Die Erfindung bezieht sich auf ein Beleuchtungssystem eines Kraftfahrzeugs mit mindestens einem Leuchtmittel zur Ausleuchtung einer Fahrbahn, wobei das Beleuchtungssystem von einem Steuergerät ansteuerbar ist.

Kraftfahrzeuge verfügen über ein Beleuchtungssytem mit dem insbesondere der in Fahrtrichtung vor dem Kraftfahrzeug liegende Fahrbahnbereich auch bei Dunkelheit ausleuchtbar ist, um das sichere Führen des Kraftfahrzeugs zu ermöglichen. Hierzu dienen verschiedene Leuchtmittel, wie Glühbirnen, Halogen- oder Xenonscheinwerfer oder LEDs, die an vorderen und/oder seitlichen Bereichen des Kraftfahrzeugs angeordnet sind, um die voraus und/oder seitlich liegenden Bereiche bei eingeschränkten Sichtverhältnissen, wie Dunkelheit oder starker Niederschlag, auszuleuchten. Zur Ansteuerung des Beleuchtungssytems kann ein Nutzer des Kraftfahrzeugs über verschiedene Betätigungselemente beispielsweise ein Standlicht oder ein Fernlicht aktivieren und bei besonders schlechten Sichtverhältnissen auch ein Nebellicht. Weiterhin können Tagfahrlichter, die unter Umständen gesetzlich vorgeschrieben sind, dauerhaft aktiviert sein, und bei einer Kurvenfahrt des Kraftfahrzeugs können sich selbsttätig statische Abbiegeleuchtmittel zuschalten. Das Beleuchtungssystem wird üblicherweise von einem entsprechenden Steuergerät des Kraftfahrzeugs angesteuert.

Ebenso ist es bekannt, an einem Frontbereich des Kraftfahrzeugs einen zumindest um eine im Wesentlichen vertikal ausgerichtete Achse verschwenkbaren Scheinwerfer vorzusehen, um beispielsweise bei Kurvenfahrten den Scheinwerfer entsprechend eines Lenkradeinschlagswinkels bzw. des Winkels, um den die Räder eingeschlagen sind, zu verschwenken. Prinzipiell können derartige Scheinwerfer auch um eine im Wesentlichen horizontal ausgerichtete Achse verschwenkbar ausgebildet sein, um beispielsweise bei einer Autobahnfahrt einen weiter voraus liegenden Bereich auszuleuchten als bei einer langsameren Fahrt auf einer Landstraße.

Zwar kann mit derartigen Beleuchtungssystemen die Ausleuchtung der in Fahrtrichtung vor dem Kraftfahrzeug liegenden Fahrbahnbereiche verbessert werden, jedoch ist es nicht zu vermeiden, dass vor allem in Notsituationen, z.B. bei einer Vollbremsung, relevante Fahrbahnbereiche nicht optimal ausgeleuchtet sind.

Die US 2005/275 562 A1 offenbart ein Beleuchtungssystem für ein Kraftfahrzeug, mit dem die Beleuchtung des Kraftfahrzeugs an die Umgebung sowie den Zustand, in der bzw. dem das Kraftfahrzeug bewegt wird, und den Zustand des Fahrers angepasst wird. Das Beleuchtungssystem arbeitet mit einem Soll-Lichtverteilungsmuster, das für verschiedene Verkehrsszenen voreingestellt ist. Im Weiteren umfasst das Beleuchtungssystem eine Vielzahl von Lichtquellen, eine Vorwärtsrichtungszustands-Bestimmungseinheit, eine Navigationseinheit und eine Lichtquellen-Steuereinheit. Die Vorwärtsrichtungszustands-Bestimmungseinheit bestimmt Straßenzustände vor dem Kraftfahrzeug mittels einer Kamera, einer Einheit zur Ermittlung einer aktuellen Lichtverteilung, einer Bestimmungseinheit für gefährliche Hindernisse und einem Radar, wobei die Bestimmungseinheit für gefährliche Hindernisse basierend auf Informationen der Kamera oder des Radar ein Objekt bestimmt, das wahrscheinlich mit dem Kraftfahrzeug kollidiert. Die Lichtquellen-Steuereinheit erhält Informationen, die sich auf die Fahrumgebung und den Zustand des Fahrers beziehen, von einer Fahrer-Authentifizierungseinheit, der Navigationseinheit, einer Kommunikationseinheit, die mit Kraftfahrzeugen in der Umgebung kommuniziert, einer Lenkwinkelerfassungseinheit einer Blickrichtungs-Erfassungseinheit und der Vorwärtsrichtungszustands-Bestimmungseinheit, um die Ausrichtung und Lichtmenge der Lichtquellen an die Fahrumgebung und den Zustand des Fahrers auch anhand der gespeicherten Lichtverteilungsmuster anzupassen. Hierbei können fahrerattributbezogene Lichtverteilungsmuster korrigierend auf verkehrsszenenbezogene Lichtverteilungsmuster einwirken. Bei einem gefährlichen Hindernis erhält die Lichtverteilungsmuster-Bestimmungseinheit Informationen der Vorwärtsrichtungszustands-Bestimmungseinheit, der Kommunikationseinheit, der Lenkwinkelerfassungseinheit und der Blickrichtungs-Erfassungseinheit, um das gefährliche Hindernis, die Richtung der Blickrichtung des Fahrers und die Richtung, in die ein Lenkrad gedreht wird, zu beleuchten.

Des Weiteren beschreibt die WO 03/008 232 A1 eine Vorrichtung und ein Verfahren zur Detektion eines Umgebungsbereichs eines Kraftfahrzeugs, bei dem eine Rechnereinheit mit einer Kamera gekoppelt ist, um bei der Erkennung eines Objekte eine Beleuchtungseinheit derart zu steuern, dass das Objekt gezielt beleuchtet ist. Erkennt die Rechnereinheit mittels der Kamera eine Gefahrensituation, dann erfolgt ein Eingriff auf eine Lenkung und/oder Bremse des Kraftfahrzeugs.

Schließlich offenbart die US 2003 156 016 A1 ein Fahrerassistenzsystem, das eine Auswertung unterschiedlicher Gefahrenidikatoren ermöglicht, wobei nach der Auswertung die Entscheidung erfolgt, ob ein Abblenden von Lichtquellen des Kraftfahrzeugs erfolgt. Neben umgebungsbedingten Gefahrenindikatoren werden Lenkinformationen und/oder Bremsinformationen ausgewertet.

Es ist Aufgabe der Erfindung, ein Beleuchtungssystem eines Kraftfahrzeugs der Eingangs genannten Art zu schaffen, mit dem unter praktisch allen denkbaren Verkehrsbedingungen beste Sichtverhältnisse gewährleistet sind.

Erfindungsgemäß wird die Aufgabe dadurch gelöst, dass bei Feststellung einer von dem Steuergerät erkannten Notsituation die Ausleuchtung der Fahrbahn durch die Zuschaltung eines Tagfahrlichts und/oder eines Schlechtwetterlichts und/oder eines Nebelscheinwerferlichts und/oder eines Abbiegelichts und/oder eines Fernlichts optimiert wird.

Mit einem derart ausgelegten Beleuchtungssystem kann unter anderem die Richtung, in der das Licht eines Scheinwerfers ausgestrahlt wird, verändert werden, um beispielsweise die Scheinwerfer eines Abblendlichts breiter auszurichten, um die gesamte Fahrbahnbreite auszuleuchten. Hierzu werden die Scheinwerfer oder lediglich die Reflektoren oder die Leuchtmittel der Scheinwerfer relativ zu den Reflektoren derart ausgerichtet, dass die jeweiligen Lichtkegel seitlich voraus nach rechts und links ausgestellt werden. Ebenso kann eine Lichtverteilung eines Leuchtmittels u.a. durch Veränderung einer Blendenstellung geändert werden, um eine Ausleuchtung zumindest des unmittelbar vor dem Kraftfahrzeug liegenden Bereichs der Fahrbahn zu erhalten. Selbstverständlich sind hierzu die Scheinwerfer beziehungsweise deren Lichtkegel entsprechend ausrichtbar.

Das Feststellen einer Notsituation wird vorzugsweise von einem zentralen Steuergerät des Kraftfahrzeugs durchgeführt, das alle sonstigen Funktionen des Kraftfahrzeugs steuert. Hierzu können beliebige Sensorsignale, bevorzugt die im Folgenden beschriebenen, herangezogen werden, wobei diese Sensoren üblicherweise bereits im Kraftfahrzeug vorhanden sind.

Dabei können die Scheinwerfer entweder in einer festen Richtung bezüglich der Längsachse des Kraftfahrzeugs ausgerichtet werden oder entsprechend eines Lenkradeinschlagswinkels zur Ausleuchtung eines schräg voraus liegenden Bereichs. Prinzipiell können die Scheinwerfer auch entsprechend einer Lenkbewegung nachgeführt werden.

Der Vorteil der Erfindung besteht darin, dass eine Ausleuchtung der Fahrbahn in Notsituationen verbessert ist, wobei hierzu praktisch kein zusätzlicher Aufwand notwendig ist, da lediglich das Steuergerät entsprechend hard- und/oder softwaremäßig ausgelegt werden muss, um das Beleuchtungssystem derartig anzusteuern.

Bei einer Fahrt in Dunkelheit mit Abblendlicht wird bei Feststellung einer Notsituation ein Tagfahrlicht und/oder ein Nebelscheinwerferlicht und/oder ein Abbiegelicht und/oder ein Schlechtwetterlicht zugeschaltet. Nebelscheinwerfer sind an sich bekannt, Abbiegelichter sind fest an der Karosserie angeordnete Leuchtmittel, die bei einer Kurvenfahrt Licht in einem Winkel bis ca. 110° zur Fahrtrichtung voraus abgeben, Tagfahrlichter sind weitere Leuchtmittel, die ein Licht geringerer Intensität und gegebenenfalls anderer spektraler Verteilung abgeben als ein Abblendlicht, und Schlechtwetterlicht sind Leuchtmittel zur Kenntlichmachung des Kraftfahrzeugs, beispielsweise bei starken Niederschlägen. Selbstverständlich können all diese Leuchtmittel des Beleuchtungssystems auch gemeinsam aktiviert werden, wenn vom dem zentralen Steuergerät eine Notsituation festgestellt wird. Prinzipiell kann auch ein Fernlicht zugeschaltet werden.

Zweckmäßigerweise wird die Leistung der vorhandenen Leuchtmittel, vor allem derjenigen, die bereits aktiviert sind, erhöht, um Licht höherer Intensität abzugeben, wodurch die vorausliegende Fahrbahn mit größerer Helligkeit ausgeleuchtet wird. Dies ist bei bekannten Halogen- oder Xenonscheinwerfern oder LEDs zumindest kurzfristig durchführbar, ohne die Leuchtmittel zu beschädigen.

Weiterhin kann ein schwenkbarer Scheinwerfer bzw. mehrere zur optimalen Fahrbahnausleuchtung von dem zentralen Steuergerät ausgerichtet werden. Dies erfolgt vorzugsweise um eine im Wesentlichen horizontale und/oder vertikale Achse. Derartige Kurvenlichtscheinwerfer sind an sich bekannt und dienen zur Ausleuchtung eines schräg vor dem Kraftfahrzeug liegenden Bereiches. Wird eine Notsituation festgestellt, können diese Scheinwerfer beispielsweise geradeaus nach vorne oder bei zwei Schweinwerfern diese jeweils leicht nach links und rechts voraus ausgerichtet werden. Ebenso kann ein in seiner Neigung verstellbarer Scheinwerfer derart ausgerichtet werden, dass ein Bereich unmittelbar vor dem Kraftfahrzeug ausgeleuchtet wird. Vorzugsweise sind bei einem Scheinwerfer, der in Modulgruppen zusammengefasste Leuchtdioden als Leuchtmittel umfasst, einzelne Modulgruppen selektiv einschaltbar.

Die Feststellung der Notsituation erfolgt vorteilhafterweise mit Hilfe eines bereits im Kraftfahrzeug vorhandenen ESP- und/oder ABS-Systems. Spricht ein ESP-System an, so wird beispielsweise eine Kurve mit zu hoher Geschwindigkeit durchfahren und es müssen gezielte Brems-und/oder Beschleunigungsvorgänge an den einzelnen Rädern des Kraftfahrzeugs eingeleitet werden. Dies deutet zumindest potentiell auf eine Notsituation hin. In einem solchen Fall können die Scheinwerfer der Beleuchtungsanlage zur optimalen Ausleuchtung der vorausliegenden Fahrbahn automatisch ausgerichtet werden. Gleiches gilt für das Ansprechen des ABS-Systems, um den Bremsweg zu verkürzen. Weiterhin können Neigungs- und/oder Gierratensensoren zur Feststellung einer Notsituation herangezogen werden, da bei einer zu starken Neigung bzw. einer zu starken Drehbewegung des Kraftfahrzeugs sowohl um die Längs- als um die Hochachse potentiell eine Notsituation vorliegt. Es können auch beliebige Signale weiterer Fahrassistenzsysteme berücksichtigt werden.

Weiterhin können zur Feststellung einer Notsituation unter anderem Signale bezüglich des Lenkwinkels und/oder einer Lenkwinkeländerungsrate und/oder der Geschwindigkeit und/oder einer Pedalstellung herangezogen werden. Wird beispielsweise bei hoher Geschwindigkeit ein großer Lenkwinkel gewählt, kann von dem Steuergerät selbsttätig darauf geschlossen werden, dass das Kraftfahrzeug unweigerlich ins Schleudern kommen muss und dementsprechend werden die Scheinwerfer des Beleuchtungssystems ausgerichtet. Ebenso kann aus einem voll durchgedrückten Bremspedal auf das Vorliegen einer Notsituation geschlossen werden. Auch das schnelle Drehen des Lenkrads deutet im Allgemeinen auf eine Notsituation hin.

Ferner ist es möglich, Informationen eines Navigationssystems zur Feststellung einer Notsituation heranzuziehen. Ist es aus der Ortsangabe des Navigationssystems bekannt, dass ein im Wesentlichen geradlinig verlaufender Abschnitt einer Autobahn in Fahrtrichtung vor dem Kraftfahrzeug liegt und werden dennoch starke Lenkbewegungen ausgeführt, so deutet dies auf eine Notsituation hin, da beispielsweise einem unerwarteten Hindernis auf der Fahrbahn ausgewichen werden muss. Dementsprechend werden die Scheinwerfer des Beleuchtungssystems ausgerichtet.

Im Vorhergehenden wurde das Beleuchtungssystem im Wesentlichen im Zusammenhang mit einem Kraftfahrzeug beschrieben. Es ist ersichtlich, derartige Beleuchtungssysteme jedoch auch auf allen anderen Gebieten der Technik einzusetzen, beispielsweise in einem Flugzeug.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

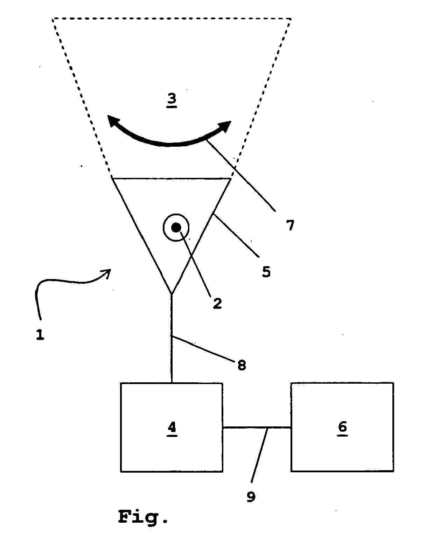

Die Erfindung wird im Folgenden anhand eines Ausführungsbeispiels unter Bezugnahme auf die zugehörige Zeichnung näher erläutert. Die einzige Figur der Zeichnung zeigt den schematischen Aufbau eines erfindungsgemäßen Beleuchtungssystems eines Kraftfahrzeugs.

Das Beleuchtungssystem umfasst mindestens einen Scheinwerfer 1, der um eine Hochachse 2, wie durch den Doppelpfeil 7 angedeutet, verschwenkbar ist, um einen Lichtkegel 3 in verschiedene Richtungen auszurichten. Hierzu kann entweder der gesamte Scheinwerfer 1 oder nur ein Reflektor 5 bzw. ein Leuchtmittel und/oder eine Blende relativ zum Reflektor 2 bewegt werden. Zum Verschwenken des Scheinwerfers 1 dient ein elektrischer Stellmotor, der von einem Steuergerät 4 angesteuert wird, wie durch die Verbindungslinie 8 angedeutet. Prinzipiell kann der Scheinwerfer 1 auch um eine im Wesentlichen horizontale Achse verschwenkt werden, um beispielsweise einen Nahbereich der Fahrbahn vor dem Kraftfahrzeug oder einen weiter voraus liegenden Bereich bei einer schnellen Autobahnfahrt auszuleuchten.

Das Steuergerät 4 kann anhand von im Kraftfahrzeug über Datenbus-Architekturen vorliegende Sensorsignale eine Notsituation feststellen. Dies kann unter anderem mithilfe eines ESP-Systems, eines ABS-Systems oder sonstiger beliebiger elektronischer Fahrhilfen erfolgen. Spricht ein solches System an, so liegt üblicherweise eine Notsituation vor, da beispielsweise über ein ABS-System stark gebremst wird oder ein ESP-System bei zu schneller Kurvenfahrt Räder gezielt abbremsen muss. Weiterhin können Sensorsignale des Lenkradeinschlagwinkels, die Fahrzeuggeschwindigkeit, eine Pedalstellung und dergleichen herangezogen werden.

Zusätzlich kann ein Navigationssystem 6 mit dem Steuergerät 4 gekoppelt sein, wie durch die Verbindungslinie 9 angedeutet, um Informationen über die vorausliegenden Fahrbahnabschnitte bei der Feststellung einer Notsituation zu berücksichtigen. Ist über das Navigationssystem 6 beispielsweise bekannt, dass ein im Wesentlichen geradlinig verlaufender Autobahnabschnitt vorausliegt, so führen starke Lenkbewegungen, die mit einem Lenkwinkelsensor feststellbar sind, zur Feststellung einer Notsituation durch das Steuergerät 4.

In einem solchen Fall wird der Scheinwerfer 1 derart ausgerichtet, dass die in Fahrtrichtung vor dem Kraftfahrzeug voraus liegenden Bereiche der Fahrbahn optimal ausgeleuchtet werden. Sind an dem Kraftfahrzeug zwei frontseitige Scheinwerfer 1 vorhanden, können diese auch geringfügig nach rechts und links außen ausgestellt werden, um auch seitlich vorausliegende Fahrbahnabschnitte auszuleuchten.

Erfindungsgemäß sind weitere Leuchtmittel, wie Nebelscheinwerfer oder dergleichen, zugeschaltet und eventuell mit erhöhter Intensität betrieben, um eine verbesserte Ausleuchtung zu erhalten.

### Bezugszeichenliste

- 1.: Scheinwerfer
- 2.: Hochachse
- 3.: Lichtkegel
- 4.: Steuergerät
- 5.: Reflektor
- 6.: Navigationssystem
- 7.: Doppelpfeil
- 8.: Verbindungslinie
- 9.: Verbindungslinie

## Patentansprüche

1. Beleuchtungssystem eines Kraftfahrzeugs mit mindestens einem Leuchtmittel zur Ausleuchtung einer Fahrbahn, wobei das Beleuchtungssystem von einem Steuergerät (4) ansteuerbar ist, **dadurch gekennzeichnet, dass** bei Feststellung einer von dem Steuergerät (4) erkannten Notsituation die Ausleuchtung der Fahrbahn durch die Zuschaltung eines Tagfahrlichts und/oder eines Schlechtwetterlichts und/oder eines Nebelscheinwerferlichts und/oder eines Abbiegelichts und/oder eines Fernlichts optimiert wird.

2. Beleuchtungssystem nach Anspruch 1, **dadurch gekennzeichnet, dass** eine Leistung des Leuchtmittels erhöhbar ist.

3. Beleuchtungssystem nach Anspruch 1 oder 2, **dadurch gekennzeichnet, dass** ein schwenkbarer Scheinwerfer (1) zur optimalen Fahrbahnausleuchtung ausrichtbar ist.

4. Beleuchtungssystem nach Anspruch 1 oder 2, **dadurch gekennzeichnet, dass** bei einem Scheinwerfer, der in Modulgruppen zusammengefasste Leuchtdioden als Leuchtmittel umfasst, einzelne Modulgruppen selektiv einschaltbar sind.

5. Beleuchtungssystem nach einem der Ansprüche 1 bis 4, **dadurch gekennzeichnet, dass** die Notsituation mit Hilfe eines ESP- und/oder ABS-Systems feststellbar ist.

6. Beleuchtungssystem nach einem der Ansprüche 1 bis 5, **dadurch gekennzeichnet, dass** zur Feststellung der Notsituation ein Lenkwinkel und/oder eine Lenkwinkeländerungsrate und/oder eine Geschwindigkeit und/oder eine Pedalstellung des Kraftfahrzeugs heranziehbar ist.

7. Beleuchtungssystem nach einem der Ansprüche 1 bis 6, **dadurch gekennzeichnet, dass** Informationen eines Navigationssystems bei der Feststellung der Notsituation berücksichtigbar sind.

## Claims

1. A lighting system of a motor vehicle, comprising at least one lighting means for illuminating a road, with the lighting means being controllable by a control device (4), **characterized in that** in the case of an emergency recognized by the control device (4) the illumination of the road is optimized by activating a daytime light and/or an adverse-weather light and/or a fog light and/or a cornering light and/or a high beam.

2. A lighting system according to claim 1, **characterized in that** the power of a lighting means can be increased.

3. A lighting system according to claim 1 or 2, **characterized in that** a swivelable headlight (1) can be aligned for optimal illumination of the road.

4. A lighting system according to claim 1 or 2, **characterized in that** individual modular groups can be activated selectively in a headlight which comprises light-emitting diodes as lighting means which are combined into modular groups.

5. A lighting system according to one of the claims 1 to 4, **characterized in that** the emergency situation can be determined with the help of an ESP and/or ABS system.

6. A lighting system according to one of the claims 1 to 5, **characterized in that** for determining the emergency situation a steer angle and/or a steer-angle alteration rate and/or a speed and/or a pedal position of the motor vehicle can be used.

7. A lighting system according to one of the claims 1 to 6, **characterized in that** information of a navigation system can be considered in the determination of the emergency situation.

## Revendications

1. Système d'éclairage d'un véhicule à moteur avec au moins une lampe pour éclairer une chaussée, lequel système d'éclairage peut être commandé par une unité de commande (4), **caractérisé en ce que** lorsqu'une situation d'urgence reconnue par l'unité de commande (4) est détectée, l'éclairage de la chaussée est optimisé par l'allumage d'un feu de route de jour et/ou d'un feu de mauvais temps et/ou d'un feu de brouillard et/ou d'un feu de virage et/ou d'un feu longue portée.

2. Système d'éclairage selon la revendication 1, **caractérisé en ce qu'**une puissance de la lampe peut être augmentée.

3. Système d'éclairage selon la revendication 1 ou 2, **caractérisé en ce qu'**un projecteur pi-votant (1) peut être orienté de façon à obtenir un éclairage optimal de la chaussée.

4. Système d'éclairage selon la revendication 1 ou 2, **caractérisé en ce que** lorsqu'il s'agit d'un projecteur comprenant comme lampes des diodes électroluminescentes regroupées en groupes modulaires, les différents groupes modulaires peuvent être activés sélectivement.

5. Système d'éclairage selon l'une des revendications 1 à 4, **caractérisé en ce que** la situation d'urgence peut être détectée à l'aide d'un système d'ESP et/ou d'ABS.

6. Système d'éclairage selon l'une des revendications 1 à 5, **caractérisé en ce que** la détection de la situation d'urgence peut utiliser un angle de direction et/ou une vitesse de changement de l'angle de direction et/ou une vitesse et/ou une position des pédales du véhicule à moteur.

7. Système d'éclairage selon l'une des revendications 1 à 6, **caractérisé en ce que** des informations d'un système de navigation peuvent être prises en compte pour la détection de la situation d'urgence.
